(19)

Europäisches
Patentamt

European
Patent Office

Office européen
des brevets

(11)   **EP 4 317 117 B1**

(12)   **EUROPEAN PATENT SPECIFICATION**

(45) Date of publication and mention
of the grant of the patent:
**12.03.2025   Bulletin 2025/11**

(21) Application number: **22188754.0**

(22) Date of filing: **04.08.2022**

(51) International Patent Classification (IPC):
*C05B 1/00* (2006.01)     *C05B 7/00* (2006.01)
*C05B 9/00* (2006.01)     *C05D 1/00* (2006.01)
*C05D 3/00* (2006.01)     *C05G 5/12* (2020.01)
*C05G 5/30* (2020.01)

(52) Cooperative Patent Classification (CPC):
(C-Sets available)
**C05B 7/00; C05B 9/00; C05G 5/12; C05G 5/30**
(Cont.)

(54) **N-P-CA-MG COMPLEX NUTRIENT COATED BY SIO2**

N-P-CA-MG-KOMPLEX-NÄHRSTOFF, BESCHICHTET MIT SIO2

NUTRIMENT COMPLEXE N-P-CA-MG REVÊTU DE SIO2

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.02.2024   Bulletin 2024/06**

(73) Proprietor: **Sabic Agri-Nutrients Company
31961 Jubail (SA)**

(72) Inventors:
• **MAMEDOV, Aghaddin
Texas, 77478 (US)**

• **AL-RABHI, Mohamed
Texas, 77478 (US)**

(74) Representative: **J A Kemp LLP
80 Turnmill Street
London EC1M 5QU (GB)**

(56) References cited:
WO-A1-2021/195735     CN-A- 1 184 093
FR-A- 1 316 076     US-A- 3 126 254
US-A- 3 348 910

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C05B 1/00, C05B 7/00;**
**C05B 7/00, C05B 9/00**

**Description**

**I. Field of the Disclosure**

This disclosure generally concerns slow-release compositions containing calcium ammonium phosphate and magnesium ammonium phosphate.

**II. Background**

Fertilizers have been used for centuries to supplement soils with nutrients needed for plant growth. Conventional, non-coated fertilizers are known to be ineffective due to the rapid release of soluble nutrients to the soil. As such, the control of fertilizer nutrient release rate has become an area of intensive research.

Controlled release fertilizers (CRFs) control the release of water-soluble nutrients in some instances by providing a coating over the fertilizer surface. Many CRFs employ a synthetic polymer to coat and encapsulate the fertilizer. Oftentimes, the synthetic polymer coating is difficult to degrade, which limits the amount of nutrients released to the soil. Additionally, the polymer material itself is released into the soil, leading to contamination of soil and both surface and ground water.

With the global population expected to continue rising and farmable land decreasing, farmers need to use the land available to them more efficiently. The increasing demand for crop production directly influences the need for improved and more efficient fertilizers.

US3126254, US3348910 and FR1316076 describe fertilizers obtained from olivine and phosphoric acid and CN1184093 describe a coated MgCa phosphate fertiliser.

**SUMMARY OF THE INVENTION**

A solution to at least some of the problems associated with fertilizer effectiveness is disclosed herein, including a fertilizer composition that exhibits a slow and sustained nutrient release profile. Certain aspects of the present disclosure relate to the production and use of fertilizers that exhibit a slow and sustained nutrient-release profile, in the absence of a polymer coating. In some aspects, the fertilizer composition includes a non-polluting framework that helps to release nutrients to the soil over an extended period of time. The slow-release fertilizers disclosed herein can reduce labor and application costs by eliminating the need for multiple fertilizer applications. The slow-release fertilizers disclosed herein provide more uniform plant nutrition, better growth, and improved plant performance. Additionally, the slow and extended release profile provided by the fertilizers disclosed herein is useful for decreasing fertilizer loss due to leaching.

The invention provides a slow-release fertilizer composition comprising magnesium ammonium phosphate and calcium ammonium phosphate encapsulated within silicon dioxide. In some aspects, the silicon dioxide is a dehydrated silicon dioxide gel. In some aspects, the silicon dioxide acts as a binder that imparts structural integrity to the fertilizer, and as a scaffold within which fertilizer nutrients are provided. Silicon dioxide is present in many soils, and the silicon dioxide provides an innocuous, non-polluting scaffold for the fertilizer composition. In some aspects, the slow-release fertilizer composition is prepared in the form of a powder, prill, granule, or pellet. In some aspects, the fertilizer composition further comprises iron ammonium phosphate. In further aspects, the fertilizer comprises magnesium ammonium phosphate and calcium ammonium phosphate on a fertilizer surface or a silicon dioxide surface. In some aspects, the fertilizer comprises magnesium ammonium phosphate and calcium ammonium phosphate encapsulated within a dehydrated silicon dioxide gel.

The invention also provides a method for preparing a slow-release fertilizer composition comprising nitrogen (N), phosphorus (P), calcium (Ca), and magnesium (Mg), the method comprising the steps of: (a) reacting olivine and calcium oxide with phosphoric acid to produce a reaction mixture comprising calcium hydrogen phosphate, magnesium hydrogen phosphate, and silicon dioxide, and (b) reacting a source of ammonia with the calcium hydrogen phosphate and the magnesium hydrogen phosphate to produce magnesium ammonium phosphate and calcium ammonium phosphate, wherein the slow-release fertilizer composition comprises the magnesium ammonium phosphate and the calcium ammonium phosphate. The fertilizer composition further comprises silicon dioxide. In some aspects, steps (a) and (b) are performed in the same vessel. In some aspects, steps (a) and (b) are performed in separate vessels. In some aspects, the method further comprises drying the fertilizer composition. In some aspects, the reaction mixture further comprises iron ammonium phosphate.

In some aspects, the step of reacting the olivine and calcium oxide with the phosphoric acid is performed at a temperature ranging from 20 °C to 75 °C. Reacting the olivine and calcium oxide with the phosphoric acid may be performed at a temperature of any one of, less than, greater than, between, or any range thereof of 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75 °C, or any range derivable therein. In some aspects, the silicon dioxide in the reaction mixture is a silicon dioxide gel. Therefore in some aspects, drying the fertilizer composition provides a silica gel fertilizer composition comprising magnesium ammonium phosphate and calcium ammonium phosphate encapsulated within a dehydrated silica gel. In some aspects, the slow-release fertilizer composition further comprises magnesium ammonium phosphate and calcium ammonium phosphate on a fertilizer surface. In some aspects, the method further comprises preparing the slow-release fertilizer composition in the form of a powder, prill, granule, or pellet.

In some aspects, the phosphoric acid is provided as an aqueous solution having a concentration ranging from 50 wt. % to 86 wt. %, such as 85 wt. % to 86 wt. %, or 50 wt. % to 60 wt. %, or 60 wt. % to 70 wt. %, or 80 wt. % to 86 wt. %, or any wt. % or range derivable therein. In some aspects, the olivine and calcium oxide are provided in a weight ratio ranging from 1:5 to 5:1. The weight ratio of olivine to calcium oxide may be any one of, less than, greater than, or between 1:5, 1:4, 1:3, 1:2, 1:1, 2:1, 3:1, 4:1, 5:1, or any range derivable therein. In some aspects, the phosphoric acid, olivine, and calcium oxide are provided in a solid weight to liquid weight ratio ranging from 1:5 to 5:1, wherein the solid weight is a combined weight of the olivine and calcium oxide, and the liquid weight is the weight of the phosphoric acid. The solid weight to liquid weight ratio may be any one of, less than, greater than, or between 1:5, 1:4, 1:3, 1:2, 1:1, 2:1, 3:1, 4:1, 5:1, or any range derivable therein. In some aspects, the source of ammonia is a solution of ammonium hydroxide, ammonium, ammonium carbonate, ammonia gas, succinimide, and/or phthalimide. In some aspects, the source of ammonia is ammonium hydroxide or ammonia. In some aspects, the source of calcium oxide is lime rock. In some aspects, the source of ammonia and phosphoric acid are provided in a weight ratio ranging from 1:1 to 1:10. The weight ratio of the source of ammonia to phosphoric acid may be any one of, less than, greater than, or between 1:1, 1:2, 1:3, 1:4, 1:5, 1:6, 1:7, 1:8, 1:9, 1:10, or any range derivable therein. Compositions and methods described herein may employ olivine as a source of magnesium, silicon, and iron. Olivine is a magnesium iron silicate mineral of the chemical formula $(Mg, Fe)_2SiO_4$. The ratio of $Mg_2SiO_4$ to $Fe_2SiO_4$ is usually greater than 1:1, such as about 0.9 to 0.1.

In some aspects, the fertilizer comprises at least one additional nutrient selected from the group consisting of potassium, chloride, sulfate, superphosphates, rock phosphate, potash, sulfate of potash (SOP), muriate of potash (MOP), kieserite, carnallite, magnesite, dolomite, boric acid, boron, copper, iron, manganese, molybdenum, zinc, selenium, silicon, free calcium, elemental sulfur, neem oil, seaweed extract, bio-stimulants, char, ashes from incineration of animal waste or animal tissues, or any combination thereof. Additional aspects of the disclosure are directed to a method for fertilizing agricultural soil comprising applying a slow-release fertilizer composition as disclosed herein to the soil.

The invention also provides a method for fertilizing agricultural soil comprising applying the slow-release fertilizer composition of the invention to the soil.

The term "fertilizer" is defined as a material applied to soils or to plant tissues to supply one or more plant nutrients essential or beneficial to the growth of plants and/or stimulants or enhancers to increase or enhance plant growth.

The term "granule" can include a solid material. A granule can have a variety of different shapes, non-limiting examples of which include a spherical, a puck, an oval, a rod, an oblong, or a random shape.

The term "particle" can include a solid material less than a millimeter in its largest dimension.

The terms "particulate" or "powder" can include a plurality of particles.

The terms "about" or "approximately" as used herein are defined as being close to as understood by one of ordinary skill in the art. In one non-limiting embodiment, the terms are defined to be within 10%, preferably within 5%, more preferably within 1%, and most preferably within 0.5%.

The terms "wt. %," "vol.%," or "mol.%" refers to a weight, volume, or molar percentage of a component, respectively, based on the total weight, the total volume of material, or total moles, that includes the component. In a non-limiting example, 10 grams of component in 100 grams of the material is 10 wt. % of component.

The use of the word "a" or "an" when used in conjunction with the term "comprising" may mean "one," but it is also consistent with the meaning of "one or more," "at least one," and "one or more than one."

The phrase "and/or" means "and" or "or". To illustrate, A, B, and/or C includes: A alone, B alone, C alone, a combination of A and B, a combination of A and C, a combination of B and C, or a combination of A, B, and C. In other words, "and/or" operates as an inclusive or.

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The compositions and methods for their use can "comprise," "consist essentially of," or "consist of" any of the ingredients or steps disclosed throughout the specification. Compositions and methods "consisting essentially of" any of the ingredients or steps disclosed limits the scope of the claim to the specified materials or steps which do not materially affect the basic and novel characteristic of the claimed invention.

It is contemplated that any embodiment discussed in this specification can be implemented with respect to any method or composition of the invention, and vice versa. Furthermore, compositions of the invention can be used to achieve methods of the invention.

Other objects, features and advantages of the present invention will become apparent from the following detailed description. It should be understood, however, that the detailed description and the specific examples, while indicating specific embodiments of the invention, are given by way of illustration only.

## BRIEF DESCRIPTION OF THE DRAWINGS

The following drawings form part of the present specification and are included to further demonstrate certain aspects of the present invention. The invention may be better understood by reference to one or more of these drawings in combination with the detailed description of specific embodiments presented herein.

FIG. 1: a schematic of a system and method for producing a fertilizer according to a non-limiting example of a system and method disclosed herein.
FIG. 2: a schematic of a system and method for producing a fertilizer according to another non-limiting example of a system and method disclosed herein.

## DETAILED DESCRIPTION OF THE INVENTION

Certain aspects of the present disclosure provide a method for preparing a slow-release fertilizer composition, as described in the claims, comprising nitrogen (N), phosphorus (P), calcium (Ca), and magnesium (Mg). Also provided is a slow-release fertilizer composition comprising magnesium ammonium phosphate and calcium ammonium phosphate encapsulated within silicon dioxide. In some aspects, the fertilizer composition includes dehydrated silica gel. The dehydrated silica gel (silicon dioxide) can act as a binder that imparts structural integrity to the fertilizer. The dehydrated silica gel can also act as a scaffold within which fertilizer nutrients are provided. In some aspects, additional nutrients may be provided. In some aspects the additional nutrients are provided on an outer surface of the fertilizer composition.

The fertilizer composition makes use of olivine, an abundant and relatively inexpensive mineral, as a source for magnesium, iron, and silicon. Employing acid to dissolve and/or react with a combination of calcium oxide and olivine results in a mixture that comprises calcium, magnesium, silicon dioxide, possibly iron, and possibly any nutrients sourced from the acid. In some embodiments, phosphoric acid is used to contact the olivine and calcium oxide, resulting in a first mixture comprising calcium hydrogen phosphate, magnesium hydrogen phosphate, and silicon dioxide, where the phosphate components are sourced from the phosphoric acid. One or more additional nutrients can be added to the first mixture to provide a second mixture. In some embodiments, a source of ammonia is added to the first mixture to produce a second mixture comprising magnesium ammonium phosphate and calcium ammonium phosphate, wherein the ammonium components are sourced from the source of ammonia. Drying of the second mixture removes water and converts the gelatinous silica to a dehydrated silica gel. The dehydrated silica gel helps maintain structural rigidity of the fertilizer composition and acts as a framework within which the fertilizer nutrients are provided. In some aspects, additional fertilizer components can be provided in the fertilizer and/or on a surface of the fertilizer composition.

### I. Fertilizer

The slow-release fertilizer composition of the invention comprises magnesium ammonium phosphate and calcium ammonium phosphate encapsulated within silicon dioxide. Also provided is a method for preparing a slow-release fertilizer composition using olivine, calcium oxide, phosphoric acid, and a source of ammonia. The fertilizer, which may be a fertilizer granule, can contain a homogeneous mixture containing nitrogen (N), phosphorus (P), calcium (Ca), and magnesium (Mg). In some aspects, the magnesium ammonium phosphate and calcium ammonium phosphate are encapsulated in silicon dioxide or are dispersed among silicon dioxide, such as a dried silicon dioxide gel.

The ratio of elements present in the fertilizer may be tailored to specific applications. In some aspects, the weight ratio of calcium oxide and olivine can be adjusted from 1:5 to 5:1. By adjusting the weight ratio of calcium oxide and olivine, the weight ratio of calcium to magnesium in the slow-release fertilizer composition can be adjusted. In some embodiments, the weight ratio of olivine to calcium oxide weight ratio may be any one of, less than, greater than, or between 1:5, 1:4, 1:3, 1:2, 1:1, 2:1, 3:1, 4:1, 5:1, or any range derivable therein. In some aspects, the solid to liquid weight ratio of the materials used to produce the fertilizer can be adjusted. The solid weight is a combined weight of the olivine and calcium oxide, and the liquid weight is the weight of the phosphoric acid. In some aspects, the solid weight to liquid weight ratio may be any one of, less than, greater than, or between 1:5, 1:4, 1:3, 1:2, 1:1, 2:1, 3:1, 4:1, 5:1, or any range derivable therein.

The slow-release fertilizer composition comprises N, P, Ca, and Mg, wherein i) the N content of the slow-release fertilizer composition can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, ii) the P content of the slow-release fertilizer composition can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, iii) the Ca content of the slow-release fertilizer composition can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, and iv) the Mg content of the slow-release fertilizer composition can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %. In some aspects, the ratio of Ca to Mg is between 2:1 and 1:2. The ratio of Ca to Mg may be at least any one of, at most any one of, equal to any one of, or between any two of 2:1, 3:2, 1:1, 2:3, and 1:2, such as about 1:1.

Moisture content of the dried fertilizer composition can be less than 1 wt. %, such as 0.1 wt. % to 0.9 wt. %, or any one of or between any two of 0.1, 0.2, 0.3, 0.4, 0.5, 0.6, 0.7, 0.8, 0.9, or 1 wt. %, or any range thereof, based on the weight of the fertilizer granule. As a non-limiting example, the moisture content can be measured by drying the sample at 50°C, for 25 min and measuring the amount of mass lost by the fertilizer after being dried.

The slow-release fertilizer composition can be of any suitable shape. Non-limiting shapes include spherical, cuboidal, cylindrical, puck shape, oval, and oblong shapes. In some aspects, the fertilizer granule can be of cylindrical shape with a circular, elliptical, ovular, triangular, square, rectangular, pentagonal, or hexagonal cross section, although cylindrical shaped core having a cross-section of other shapes can also be made. In some aspects, the fertilizer granule at its widest dimension can be 0.5 mm to 6 mm, or 0.5 mm to 5 mm, preferably 1 mm to 4 mm, or at least any one of, at most any one of, equal to any one of, or between any two of 0.5 mm, 1 mm, 1.5 mm, 2 mm, 2.5 mm, 3 mm, 3.5 mm, 4 mm, 4.5 mm, 5 mm, 5.5 mm, and 6 mm. In some particular aspects, the fertilizer granule can have a substantially spherical shape with an average diameter 0.5 mm to 6 mm, or 0.5 mm to 5 mm, preferably 1 mm to 4 mm, or at least any one of, at most any one of, equal to any one of, or between any two of 0.5 mm, 1 mm, 1.5 mm, 2 mm, 2.5 mm, 3 mm, 3.5 mm, 4 mm, 4.5 mm, 5 mm, 5.5 mm, and 6 mm.

The slow-release fertilizer composition can be water and/or soil dispersible. In some aspects, a fertilizer granule having a size of 2 mm to 4 mm prior to adding to water, can disintegrate into particles having sizes less than 1 mm, less than 0.9 mm, less than 0.8 mm, less than 0.7 mm, less than 0.6 mm, less than 0.5 mm, less than 0.4 mm, or less than 0.3 mm, within 1 minute of adding the granule to water at a pH 7, under stirring at a rate 90 rpm to 110 rpm, at an ambient temperature.

The slow-release fertilizer composition can have a compositional make-up that is substantially homogeneous. In some instances, a compositional make-up for a 1 mm × 1 mm × 1 mm cube at any position of the mixture can be similar (within ± 20 %, or ± 10 %, or ± 5 %, or ± 3 %, ± 2 %, or ± 1 %, or ± 0.5 %) to that of a 1 mm × 1 mm × 1 mm cube at any other position of the mixture.

In some aspects, additional fertilizer substances can be included or excluded in the fertilizer. If included, additional fertilizers can be chosen based on the particular needs of certain types of soil, climate, or other growing conditions to maximize the efficacy of the fertilizer in enhancing plant growth and crop yield. Additional additives may also be included or excluded in the fertilizer. Non-limiting examples of additives that can be included or excluded from the fertilizer of the present invention include additional nitrogen nutrients, additional phosphorus nutrients, additional potassium nutrients, additional micronutrients, and/or additional secondary nutrients. The micronutrient can be copper, iron, chloride, manganese, molybdenum, or nickel, or any combinations thereof. The nitrogen nutrient can be urea, ammonium nitrate, ammonium sulfate, diammonium phosphate, monoammonium phosphate, urea-formaldehyde, ammonium chloride, and potassium nitrate. In some aspects, the additional secondary nutrients may include lime and/or superphosphate. In some instances, the additional fertilizer substances and/or the additional additives are contained in the optional coating of the fertilizer.

In some instances, the inhibitors include nitrification inhibitors and/or urease inhibitors. Suitable nitrification inhibitors include, but are not limited to, 3,4-dimethylpyrazole phosphate (DMPP), dicyandiamide (DCD), thiourea (TU), 2-chloro-6-(trichloromethyl)-pyridine (Nitrapyrin), 5-ethoxy-3-trichloromethyl-1,2,4-thiadiazol, which is sold under the tradename Terrazole®, by OHP Inc., USA, 2-amino 4-chloro 6-methyl pyrimidine (AM), 2-mercaptobenzothiazole (MBT), or 2-sulfanilamidothiazole (ST), and any combination thereof. In one aspect, a nitrification inhibitor can comprise DMPP, DCD, TU, nitrapyrin, 5-ethoxy-3-trichloromethyl-1,2,4-thiadiazol, AM, MBT, or ST, or a combination thereof. In some embodiments, a fertilizer composition can comprise NBTPT, DMPP, TU, DCD, PPDA, nitrapyrin, 5-ethoxy-3-trichloromethyl-1,2,4-thiadiazol, AM, MBT, ST, or a combination thereof.

In some instances, a binder includes a phosphate, a polyphosphate, a biodegradable polymer, or a wax, or a combination thereof. Suitable waxes include, but are not limited to, vegetable waxes, high melt waxes, ethylene bis(stearamide) wax, paraffin waxes, polyethylene based waxes, and olefin waxes. Suitable phosphates include, but are not limited to, diammonium phosphate, and monoammonium phosphate. Suitable polyphosphates include, but are not limited to, ammonium polyphosphate. Suitable biodegradable polymers include, but are not limited to, polyacrylamide, polyacrylic acid, polyacrylonitrile, biodegradable polylactic acid and other biodegradable polymeric material such as polylactic acid, poly(3-hydroxypropionic acid), polyvinyl alcohol, poly e-caprolactone, poly L-lactide, poly butylene succinate, and biodegradable starch based polymers. The binder can include plaster of Paris, flour, starch, gluten, kaolin, bentonite, colloidal silica, or combinations thereof. Suitable flours include, but are not limited to, rice flour, wheat flour, and bleached wheat flour. Suitable starches include, but are not limited to, dextrin modified starches.

In some instances, the pH buffers include MgO, $KH_2PO_4$, $NaHCO_3$, chalk powder, aluminum, magnesium hydroxide, aluminum hydroxide/magnesium hydroxide co-precipitate, aluminum hydroxide/sodium bicarbonate co-precipitate, calcium acetate, calcium bicarbonate, calcium borate, calcium carbonate, calcium bicarbonate, calcium citrate, calcium gluconate, calcium hydroxide, dibasic sodium phosphate, dipotassium hydrogen phosphate, dipotassium phosphate, disodium hydrogen phosphate, magnesium acetate, magnesium borate, magnesium bicarbonate, magnesium carbonate, magnesium hydroxide, magnesium lactate, magnesium oxide, magnesium phosphate, magnesium silicate, magnesium succinate, magnesium tartrate, potassium acetate, potassium carbonate, potassium bicarbonate, potassium borate, potassium citrate, potassium metaphosphate, potassium phthalate, potassium phosphate, potassium polyphosphate, potassium pyrophosphate, potassium succinate, potassium tartrate, sodium acetate, sodium bicarbonate, sodium borate, sodium carbonate, sodium citrate, sodium gluconate, sodium hydrogen phosphate, sodium hydroxide, sodium lactate, sodium phthalate, sodium phosphate, sodium polyphosphate, sodium pyrophosphate, sodium tartrate, sodium tripolyphosphate, synthetic hydrotalcite, tetrapotassium pyrophosphate, tetrasodium pyrophosphate, tripotassium phosphate, trisodium phosphate, and trometamol, and combinations thereof.

The slow-release fertilizer composition described herein can be comprised in a composition useful for application to soil. In some aspects, in addition to the fertilizer described herein, the composition may include other fertilizer compounds, micronutrients, primary nutrients, urea, additional nitrogen nutrients, insecticides, herbicides, or fungicides, or combinations thereof. The fertilizer described herein can also be included in a blended composition comprising other fertilizers. The other fertilizer can be urea, monoammonium phosphate (MAP), diammonium phosphate (DAP), muriate of potash (MOP), monopotassium phosphate (MKP), triple super phosphate (TSP), rock phosphate, single super phosphate (SSP), ammonium sulfate, and the like.

A fertilizer formed into a granule can have desirable physical properties such as desired levels of abrasion resistance, granule strength, pelletizability, hygroscopicity, granule shape, and size distribution. In some aspects, The fertilizer granule can have a crush strength above 1.5 kgf, such as above 1.8 kgf, such as 2 kgf to 6 kgf, or at least any one of, equal to any one of, or between any two of 2, 2.5, 3, 3.5, 4, 4.5, 5, 5.5, and 6 kgf. Bulk density of the fertilizer granules can be 1 g/cc to 1.2 g/cc, or at least any one of, at most any one of, equal to any one of, or between any two of 1, 1.02, 1.04, 1.06, 1.08, 1.1, 1.12, 1.14, 1.16, 1.18, and 1.2 g/cc. In some aspects, 10 mg or more, such as 10 mg to 40 mg, or at least any one of, at most any one of, equal to any one of, or between any two of 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, and 40 mg of the fertilizer granule can dissolve in 1 ml of water at a pH 7, under stirring at a rate 90 to 110 rpm, and at an ambient temperature, within 5 minutes of adding 100 mg of the fertilizer granules to the water. In some aspects, the fertilizer granule is capable of losing less than 0.13 wt. %, such as 0.02 % to 0.12 wt. %, or at most any one of, equal to any one of, or between any two of 0.02, 0.03, 0.04, 0.05, 0.06, 0.07, 0.08, 0.09, 0.1, 0.11, and 0.12 wt. % in an attrition loss test. Attrition loss can be measured using the following attrition loss test.

Attrition loss test: A plurality of sieved fertilizer granules with individual size 2 to 4 mm, and total volume 100 cm$^3$ is weighed (W1) and is placed into the test drum along with the 50 stainless steel balls having a total weight of 100 gm. The drum is closed and rotated for 10 min at 30 rpm. Then, the steel balls are separated from the sample and the material is screened over 2 mm sieve using a sieve shaker. The total weight of the granules over 2 mm are then re-weighed (W2). Results are calculated in terms of % weight loss using the formula:

$$\text{Weight loss due to attrition (wt. \%)} = \frac{weight\ of\ sample\ remained\ on\ 2\ mm\ sieve\ ((W2))}{intial\ weight\ of\ the\ sample\ (W1)} \times 100$$

## II. Methods of Using the Slow-Release Fertilizer Composition

The slow-release fertilizer composition, including fertilizer granules, compositions containing the fertilizer, and fertilizer blends containing the fertilizer of the present disclosure can be used in methods of increasing the amount of one or more plant nutrients in soil and of enhancing plant growth. Such methods can include applying to the soil an effective amount of a composition and/or blend containing the fertilizer of the present invention. The method may include increasing the growth and yield of crops, trees, ornamentals, etc., such as, for example, palm, coconut, rice, wheat, corn, barley, oats, and/or soybeans. The method can include applying the fertilizer blend of the present invention to at least one of a soil, an organism, a liquid carrier, a liquid solvent, etc. The composition(s) and/or fertilizer blends(s) containing the fertilizer can be applied to plants and/or soil as a top dressing fertilizer, basal fertilizer, and/or through any suitable method of application.

Non-limiting examples of plants that can benefit from the fertilizer of the present invention include vines, trees, shrubs, stalked plants, ferns, etc. The plants may include orchard crops, vines, ornamental plants, food crops, timber, and harvested plants. The plants may include Gymnosperms, Angiosperms, and/or Pteridophytes.

The effectiveness of compositions comprising the slow-release fertilizer composition of the present invention can be ascertained by measuring the amount of phosphorus and optionally other nutrients in the soil at various times after applying the fertilizer composition to the soil. It is understood that different soils have different characteristics, which can affect the stability of the nutrients in the soil. The effectiveness of a slow-release fertilizer composition can also be directly compared to other fertilizer compositions by doing a side-by-side comparison in the same soil under the same conditions.

### III. Methods of Making the Slow-Release Fertilizer Composition

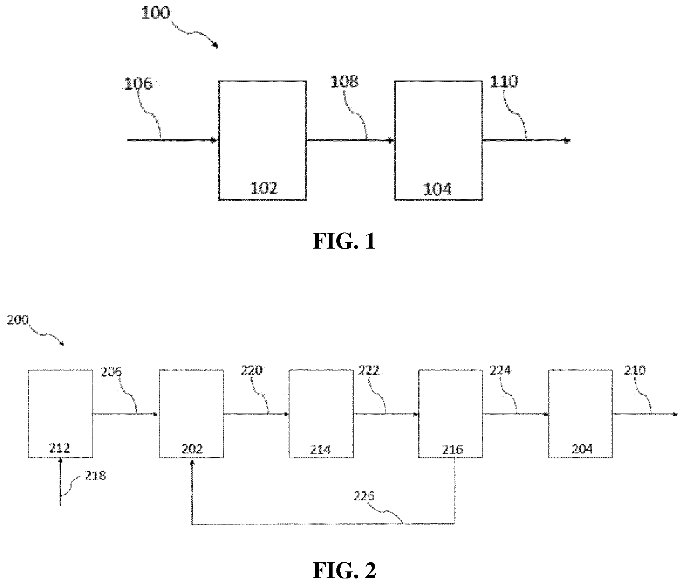

Referring to FIG. 1, a schematic of a system and method for making a fertilizer according to one example of the present invention is described. The system 100 can include a granulator 102 and a dryer 104. A feed mixture 106 can be granulated in the granulator 102 in the presence or absence of water to form a wet granulated mixture 108. The water, if present, can be provided with the feed mixture 106, and/or can be added separately to the granulator 102. The wet granulated mixture 108 can be dried in the dryer 104 to obtain dry granulated mixture 110 containing the fertilizer.

Referring to FIG. 2, a schematic of a system and method for making a fertilizer according to another example of the present invention is described. The system 200 can include a mixer/reactor 212, though the mixer and the reactor can be two, three, four, or more components, such as two reactors and a mixer or a reactor and a mixer. The system 200 can include a granulator 202, a spheronizer 214, one or more size screens 216, and a dryer 204, or any combination thereof. The feed mixture ingredients 218, separately and/or at any possible combination can be added to the mixer/reactor 212. In the mixer/reactor 212, the feed ingredients can be reacted and/or mixed to form the feed mixture 206. Feed mixture 206 can be granulated in the granulator 202 in presence or absence of additional water to form a wet granulated mixture 220. Granules of the wet granulated mixture 220 can be spheronized in the spheronizer 214 to form a wet granulated mixture 222 containing substantially spherical granules. The wet granulated mixture 222 can be passed through one or more size screens 216 to separate granules having a size smaller or bigger than a desired size from the wet granulated mixture 222 and obtain a wet granulated mixture 224 containing granules of desired size. At least a portion of the granules separated 226 from the granulation mixture 224 containing granules of desired size can be recycled to the granulator 202. The wet granulated mixture 224 containing granules of desired size can be dried in the dryer 204 to obtain dry granulated mixture 210 containing the fertilizer granule. In some aspects, the mixer/reactor 212 can contain a ribbon mixer.

The feed mixture ingredients 218 include i) calcium oxide, ii) olivine, iii) an ammonia source, e.g., $NH_4^+$ and/or $NH_3$, and iv) phosphoric acid. In some instances, a mixture ingredient provides more than one of Ca, Mg, N, and/or P. In some instances, a mixture ingredient provides additional nutrients and/or micronutrients, such as Fe and/or Si. In certain aspects, one or more ingredients can be added as a water solution. In some instances, the mixture ingredients are provided as a powder. In some instances, one or more ingredients can be added as a gas. In some instances, the $NH_3$ is provided at a pressure above 1 bar, such as at, or between, or of any range of 1.2, 1.3, 1.4, 1.5, 2, 2.5, 3, 3.5, 4, 4.5, 5, 5.5., 6, 6.5, 7, 7.5, 8, 9, 10, 15, 20, 25, 30, 35, and 40 bar. In some instances, a portion of the mixture ingredients are provided as a powder.

The feed mixture 106, 206 contains Ca, Mg, N, P, Fe, and optionally Si. In some aspects, the feed mixture 106, 206 can contain i) a metal oxide, ii) phosphoric acid, iii) ammonium hydroxide, iv) olivine, v) $CaNH_4PO_4$, vi) $MgNH_4PO_4$, vii) $SiO_2$, viii) $FeHPO_4$, ix) $MgHPO_4$, and/or x) $CaHPO_4$.

Water can be added to the feed mixture in the mixer/reactor 212 and/or in the granulator 102, 202. In certain aspects, 5 gm to 20 gm, or at least any one of, at most any one of, equal to any one of, or between any two 5, 6, 7, 8, 9, 10, 11, 12, 13, 14, 15, 16, 17, 18, 19, and 20 gm of water in total (e.g., added with one or more feed mixture ingredients and/or separately) can be added to the feed mixture, per 100 gm of feed mixture.

In some aspects, the granulator 102, 202 can be a drum granulator, pugmill granulator, pan granulator, solid mixer, abrasion drum, extruder, high-shear mixer granulator, roller granulator, mycromix, or a round bottom flask. In the granulator 102, 202 the feed mixture 106, 206 can be granulated by agglomeration, spray granulation, compaction, slurry granulation and/or high-shear mixer granulation. In some particular aspect, the feed mixture 106, 206 can be granulated in the granulator 102, 202 by compaction. In some aspects, the granulator 102, 202 can contain at least two rollers and compaction granulation can include compressing the feed mixture using the at least two rollers. In some aspects, the two rollers can be moved in counter current direction during compaction. In some aspects, the feed mixture can be compressed into shaped pellets, such as cylindrical pellets, by the at least two rollers. In some aspects, a surface of one roller can have desired holes to compress the feed mixture into the holes, and the surface of the other roller can push the feed mixture into the holes. Pressure during granulation, e.g. compaction granulation can be 1 bar to 40 bar, or at least any one of, at most any one of, equal to any one of, or between any two 1, 2, 3, 4, 5, 10, 15, 20, 25, 30, 35, and 40 bar. In certain aspects, the feed mixture can be granulated in the granulator 102, 202 at ambient temperature to 50 °C, or at least any one of, at most any one of, equal to any one of, or between any two of -20, -15, -10, 0, 5, 10, 15, 20, 25, 30, 35, 40, 45 and 50 °C.

In some aspects, reacting of the feed mixture ingredients, mixing, and granulating the feed mixture can be performed in different containers, e.g., the mixer/reactor 212 and the granulator 202 can be different containers. In some aspects, reacting of the feed mixture ingredients, mixing, and granulating the feed mixture can be performed in the same container, e.g., the mixer/reactor 212 and the granulator 202 can be the same container (not shown). In some aspects, the mixer/reactor 212 and the granulator 202 can be more than two containers. In some instances, the $MgHPO_4$ and $CaHPO_4$ are formed in two different containers. In some instances, the $MgHPO_4$, and $CaHPO_4$ are formed in one container. In some instances, the $CaNH_4PO_4$ and $MgNH_4PO_4$ are formed in two different containers. In some instances, the $CaNH_4PO_4$ and $MgNH_4PO_4$ are formed in one container. In some instances, the $MgHPO_4$ and $CaHPO_4$ are formed in two different containers and the $CaNH_4PO_4$ and $MgNH_4PO_4$ are formed in one container. In some instances, the $MgHPO_4$ and $CaHPO_4$ are formed in two different containers and the $CaNH_4PO_4$ and $MgNH_4PO_4$ are formed in two different containers. In some instances, the $MgHPO_4$ and $CaHPO_4$ are formed in one container and the $CaNH_4PO_4$ and $MgNH_4PO_4$ are formed in one container. In some instances, the $MgHPO_4$ and $CaHPO_4$ are formed in one container and the $CaNH_4PO_4$ and $MgNH_4PO_4$ are formed in the same container as the $MgHPO_4$ and $CaHPO_4$.

In some aspects, the $MgHPO_4$, $CaHPO_4$, $CaNH_4PO_4$, and/or $MgNH_4PO_4$ are formed at a temperature of at least, at most, equal to, or between any two of 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99 °C, such as between 20 and 75 °C or between 30 and 75 °C.

In some instances, the fertilizer can be extruded before drying. The extruder can extrude the fertilizer at pressures at least, at most, equal to, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, and 40 bar. The extruder can extrude the fertilizer at temperatures at least, at most, equal to, or between any two of -20, -15, -10, 0, 5, 10, 15, 20, 25, 30, 35, 40, 45 and 50 °C. The extrudate can be sliced or divided before drying, such as by a die.

In certain aspect, the desired size of a final fertilizer product, such as a granule, can be 0.5 to 5 mm, or 1 to 4 mm, and having a size lower than 0.5 mm or 1 mm, and/or having a size bigger than 4 mm or 5 mm can be separated from the wet granulated mixture 222 in the one or more size screens 216. In certain aspects, the wet granulated mixture can be rounded and/or spheronized in a spheronizer. In some instances, the wet granulated mixture is contacted with a spheronizer for at least any one of, at most any one of, equal to any one of, or between any two of 5, 10, 15, 20, 25, 30, 35, 40, 50, or 60 seconds. The spheronizer in some instances has a rotating or rotatable disk capable of rotating at least any one of, at most any one of, equal to any one of, or between any two of 200, 500, 1000, 1500, 2000, 2500, 3000, 3500, 4000, 4500, 5000 rpm. In certain aspects, the wet granulated mixture can be dried in the dryer 104, 204 at a temperature 40 °C to 85 °C, or at least any one of, at most any one of, equal to any one of, or between any two of 40, 45, 50, 55, 60, 65, 70, 75, 80 and 85 °C. In some aspects, the dryer 104, 204 can be a fluid bed dryer, drum dryer, or flash dryer. In some aspects, the wet granulated mixture can be dried in the dryer 104, 204 with an hot air flow having a flow rate of at least any one of, at most any one of, equal to any one of, or between any two of 100, 150, 200, 250, 300, 350, 400, 450, and 500 m$^3$/hr and/or a rotation of at least any one of, at most any one of, equal to any one of, or between any two of 5, 10, 15, 20, 25, 30, 35, 40, 45, and 50 rpm.

**Examples**

The present invention will be described in greater detail by way of specific examples. The following examples are offered for illustrative purposes only. Those of skill in the art will readily recognize a variety of noncritical parameters which can be changed or modified to yield essentially the same results.

**Example 1**

**Production of a slow-release fertilizer composition**

160 g of olivine powder can be added to 78 g of 80 wt. % phosphoric acid in a 1 liter glass beaker and the reaction mixture can be stirred. The temperature of the reaction mixture can then be increased at a rate of 4 °C /min until the temperature reaches 62-65 °C. The reaction mixture can be stirred for 45 minutes at this temperature.

In a separate beaker, 80 g of CaO can be mixed with 140 g of 80 wt. % phosphoric acid in a 1 liter glass beaker and stirred. The temperature of the reaction mixture can then be increased at a rate of 4 °C /min until the temperature reached 62-65 °C. The reaction mixture can be stirred for 30 minutes at this temperature.

The contents of both beakers can be combined and the temperature can be reduced to 40 °C. 57 g of a solution of $NH_4OH$ can be added dropwise to the mixture. The resulting reaction mixture can be stirred for 30 min at 40 °C. The temperature can then be raised to 74 °C at which point, some of the water begins to evaporate and the mixture become gelatinous. The gelatinous mixture can then be dried to provide a solid fertilizer material. The dried solid material can then be ground into final fertilizer product particles having a 20-60 mesh size.

**Claims**

1. A method for preparing a slow-release fertilizer composition comprising nitrogen (N), phosphorus (P), calcium (Ca), and magnesium (Mg), the method comprising steps:

   a. reacting olivine and calcium oxide with phosphoric acid to produce a reaction mixture comprising calcium hydrogen phosphate, magnesium hydrogen phosphate, and silicon dioxide; and
   b. reacting a source of ammonia with the calcium hydrogen phosphate and magnesium hydrogen phosphate to produce magnesium ammonium phosphate and calcium ammonium phosphate,

   wherein the slow-release fertilizer composition comprises the magnesium ammonium phosphate and calcium ammonium phosphate.

2. The method of claim 1, wherein steps a and b are performed in the same vessel.

3. The method of claim 1 or 2, further comprising drying the fertilizer composition.

4. The method of any one of claims 1 to 3, wherein the step of reacting the olivine and calcium oxide with the phosphoric acid is performed at a temperature ranging from 20 °C to 75 °C.

5. The method of any one of claims 1 to 4, wherein drying the fertilizer composition provides a dehydrated silica gel fertilizer composition comprising magnesium ammonium phosphate and calcium ammonium phosphate encapsulated within a dehydrated silica gel.

6. The method of any one of claims 1 to 5, wherein the slow-release fertilizer composition comprises magnesium ammonium phosphate and calcium ammonium phosphate on a fertilizer surface.

7. The method of any one of claims 1 to 6, wherein the olivine and calcium oxide are provided in a weight ratio ranging from 1:5 to 5:1.

8. The method of any one of claims 1 to 7, wherein the source of ammonia is ammonium hydroxide or ammonia.

9. The method of any one of claims 1 to 8, wherein the source of ammonia and phosphoric acid are provided in a weight ratio ranging from 1:1 to 1:10.

10. The method of any one of claims 1 to 9, wherein the slow-release fertilizer composition is prepared in the form of a powder, prill, granule, or pellet.

11. A slow-release fertilizer composition comprising magnesium ammonium phosphate and calcium ammonium phosphate encapsulated within silicon dioxide.

12. The slow-release fertilizer composition of claim 11, wherein the composition further comprises iron ammonium phosphate.

13. The slow-release fertilizer composition of claim 11 or 12, wherein the silicon dioxide is a dehydrated silicon dioxide gel.

14. The slow-release fertilizer composition of any one of claims 11 to 13, wherein the fertilizer composition is provided in the form of a powder, prill, granule, or pellet.

15. A method for fertilizing agricultural soil comprising applying the slow-release fertilizer composition of any one of claims 11 to 14 to the soil.

**Patentansprüche**

1. Verfahren zum Herstellen einer Düngemittelzusammensetzung mit langsamer Freisetzung, umfassend Stickstoff (N), Phosphor (P), Calcium (Ca) und Magnesium (Mg), wobei das Verfahren Schritte umfasst:

   a. Reagieren von Olivin und Calciumoxid mit Phosphorsäure, um eine Reaktionsmischung, umfassend Calciumhydrogenphosphat, Magnesiumhydrogenphosphat und Siliziumdioxid, herzustellen; und
   b. Reagieren einer Ammoniakquelle mit dem Calciumhydrogenphosphat und dem Magnesiumhydrogenphosphat und Magnesiumhydrogenphosphat, um Magnesiumammoniumphosphat und Calciumammoniumphosphat herzustellen,

   wobei die Düngemittelzusammensetzung mit langsamer Freisetzung das Magnesiumammoniumphosphat und Calciumammoniumphosphat umfasst.

2. Verfahren nach Anspruch 1, wobei die Schritte a und b in demselben Gefäß durchgeführt werden.

3. Verfahren nach Anspruch 1 oder 2, ferner umfassend das Trocknen der Düngemittelzusammensetzung.

4. Verfahren nach einem der Ansprüche 1 bis 3, wobei der Schritt des Reagierens des Olivins und des Calciumoxids mit der Phosphorsäure bei einer Temperatur im Bereich von 20 °C bis 75 °C durchgeführt wird.

5. Verfahren nach einem der Ansprüche 1 bis 4, wobei das Trocknen der Düngemittelzusammensetzung eine dehydrierte Kieselgeldüngemittelzusammensetzung bereitstellt, die Magnesiumammoniumphosphat und Calciumammoniumphosphat umfasst, das in einem dehydrierten Kieselgel eingekapselt ist.

6. Verfahren nach einem der Ansprüche 1 bis 5, wobei die Düngemittelzusammensetzung mit langsamer Freisetzung Magnesiumammoniumphosphat und Calciumammoniumphosphat auf einer Düngemitteloberfläche umfasst.

7. Verfahren nach einem der Ansprüche 1 bis 6, wobei das Olivin und das Calciumoxid in einem Gewichtsverhältnis im Bereich von 1 : 5 bis 5 : 1 bereitgestellt werden.

8. Verfahren nach einem der Ansprüche 1 bis 7, wobei die Ammoniakquelle Ammoniumhydroxid oder Ammoniak ist.

9. Verfahren nach einem der Ansprüche 1 bis 8, wobei die Ammoniakquelle und die Phosphorsäure in einem Gewichtsverhältnis im Bereich von 1:1 bis 1:10 bereitgestellt werden.

10. Verfahren nach einem der Ansprüche 1 bis 9, wobei die Düngemittelzusammensetzung mit langsamer Freisetzung in der Form eines Pulvers, Prillen, eines Granulats oder eines Pellets hergestellt wird.

11. Düngemittelzusammensetzung mit langsamer Freisetzung, umfassend Magnesiumammoniumphosphat und Calciumammoniumphosphat, das in Siliziumdioxid eingekapselt ist.

12. Düngemittelzusammensetzung mit langsamer Freisetzung nach Anspruch 11, wobei die Zusammensetzung ferner Eiseanmmoniumphosphat umfasst.

13. Düngemittelzusammensetzung mit langsamer Freisetzung nach Anspruch 11 oder 12, wobei das Siliciumdioxid ein dehydriertes Siliciumdioxidgel ist.

14. Düngemittelzusammensetzung mit langsamer Freisetzung nach einem der Ansprüche 11 bis 13, wobei die Düngemittelzusammensetzung in der Form eines Pulvers, Prillen, eines Granulats oder eines Pellets bereitgestellt wird.

15. Verfahren zum Düngen landwirtschaftlicher Erde, umfassend das Anwenden der Düngemittelzusammensetzung mit langsamer Freisetzung nach einem der Ansprüche 11 bis 14 auf die Erde.

**Revendications**

1. Procédé de préparation d'une composition d'engrais à libération lente comprenant de l'azote (N), du phosphore (P), du calcium (Ca) et du magnésium (Mg), le procédé comprenant les étapes consistant à :

a. faire réagir de l'olivine et de l'oxyde de calcium avec de l'acide phosphorique pour produire un mélange réactionnel comprenant de l'hydrogénophosphate de calcium, de l'hydrogénophosphate de magnésium et du dioxyde de silicium ; et

b. faire réagir une source d'ammoniac avec l'hydrogénophosphate de calcium et l'hydrogénophosphate de magnésium pour produire du phosphate d'ammonium et de magnésium et du phosphate d'ammonium et de calcium, la composition d'engrais à libération lente comprenant le phosphate d'ammonium et de magnésium et le phosphate d'ammonium et de calcium.

2. Procédé selon la revendication 1, dans lequel les étapes a et b sont réalisées dans le même récipient.

3. Procédé selon la revendication 1 ou 2, comprenant en outre le séchage de la composition d'engrais.

4. Procédé selon l'une quelconque des revendications 1 à 3, dans lequel l'étape de réaction de l'olivine et de l'oxyde de calcium avec l'acide phosphorique est réalisée à une température comprise entre 20 °C et 75 °C.

5. Procédé selon l'une quelconque des revendications 1 à 4, dans lequel le séchage de la composition d'engrais fournit une composition d'engrais à base de gel de silice déshydraté comprenant du phosphate d'ammonium et de magnésium et du phosphate d'ammonium et de calcium encapsulés dans un gel de silice déshydraté.

6. Procédé selon l'une quelconque des revendications 1 à 5, dans lequel la composition d'engrais à libération lente comprend du phosphate d'ammonium et de magnésium et du phosphate d'ammonium et de calcium sur une surface d'engrais.

7. Procédé selon l'une quelconque des revendications 1 à 6, dans lequel l'olivine et l'oxyde de calcium sont fournis dans un rapport pondéral compris entre 1 : 5 et 5 : 1.

8. Procédé selon l'une quelconque des revendications 1 à 7, dans lequel la source d'ammoniac est l'hydroxyde d'ammonium ou l'ammoniac.

9. Procédé selon l'une quelconque des revendications 1 à 8, dans lequel la source d'ammoniac et d'acide phosphorique sont fournies dans un rapport pondéral compris entre 1 : 1 et 1 : 10.

10. Procédé selon l'une quelconque des revendications 1 à 9, dans lequel la composition d'engrais à libération lente est préparée sous la forme d'une poudre, d'une granule, d'un granulé ou d'une pastille.

11. Composition d'engrais à libération lente comprenant du phosphate d'ammonium et de magnésium et du phosphate d'ammonium et de calcium encapsulés dans du dioxyde de silicium.

12. Composition d'engrais à libération lente selon la revendication 11, dans laquelle la composition comprend en outre du phosphate d'ammonium et de fer.

13. Composition d'engrais à libération lente selon la revendication 11 ou 12, dans laquelle le dioxyde de silicium est un gel de dioxyde de silicium déshydraté.

14. Composition d'engrais à libération lente selon l'une quelconque des revendications 11 à 13, dans laquelle la composition d'engrais est fournie sous la forme d'une poudre, d'une granule, d'un granulé ou d'une pastille.

15. Procédé de fertilisation d'un sol agricole comprenant l'application de la composition d'engrais à libération lente selon l'une quelconque des revendications 11 à 14 au sol.

**FIG. 1**

**FIG. 2**

**EP 4 317 117 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3126254 A
- US 3348910 A
- FR 1316076
- CN 1184093